(19) Europäisches Patentamt

European Patent Office

Office européen des brevets

(11) **EP 1 067 734 B1**

(12) **EUROPÄISCHE PATENTSCHRIFT**

(45) Veröffentlichungstag und Bekanntmachung des Hinweises auf die Patenterteilung:
**24.11.2004  Patentblatt 2004/48**

(51) Int Cl.⁷: **H04L 12/42**, H04L 12/26, H04L 12/44, H04B 10/00, H04L 12/437, B60R 16/02

(21) Anmeldenummer: **00113357.8**

(22) Anmeldetag: **23.06.2000**

(54) **Verfahren zur Überprüfung einer ringförmigen optischen Netzleitung zur Datenübertragung zwischen mehreren Netzteilnehmern in einem Kraftfahrzeug**

Method for checking a ring-shaped optical network for data transmission between a plurality of network nodes in a motor vehicle

Procédé de surveillance d'un réseau optique en anneau de transmission de données entre plusieurs noeuds dans un véhicule à moteur

(84) Benannte Vertragsstaaten:
**DE FR GB IT SE**

(30) Priorität: **09.07.1999  DE 19931838**

(43) Veröffentlichungstag der Anmeldung:
**10.01.2001  Patentblatt 2001/02**

(73) Patentinhaber: **DaimlerChrysler AG**
**70567 Stuttgart (DE)**

(72) Erfinder:
• **Bösinger, Marcus**
**70439 Stuttgart (DE)**
• **Brandes, Jens**
**71034 Böblingen (DE)**
• **Marquardt, Dieter**
**71083 Herrenberg (DE)**
• **Merget, Peter**
**73733 Esslingen (DE)**
• **Petry, Franz-Josef**
**71134 Aidlingen (DE)**
• **Schwarz, Heinz-Jürgen**
**71566 Althütte (DE)**
• **Seidl, Dieter**
**72766 Reutlingen (DE)**

(56) Entgegenhaltungen:
WO-A-99/12313              DE-A- 19 511 178
US-A- 5 732 086

**Beschreibung**

Die Erfindung betrifft ein Verfahren zur Überprüfung einer ringförmigen optischen Netzleitung zur Datenübertragung zwischen mehreren Netzteilnehmern in einem Kraftfahrzeug.

Es ist bekannt, in Kraftfahrzeugen neben den bekannten CAN-Netzwerken zur Signalübertragung ein Netzwerk vorzusehen, bei dem die Daten auf optischem Weg übertragen werden. Dieses Netzwerk ist als Ring aufgebaut und verbindet Radio, CD-Wechsler, Sound-Amplifier, Telefon, Handy und Sprachbediensystem über einen optischen Datenbus ($D^2B$) miteinander.

Derartige Kommunikations- und Informationssysteme erfordern im Gegensatz zu der bisherigen asynchronen, also ereignisgesteuerten Datenübertragung wie beim CAN-Bus eine synchrone Datenübertragung mit höheren Baudraten, die mit optischen Signalen übertragbar werden.

Beispielsweise kann das Radio als Netzteilnehmer die Master-Funktion übernehmen und dabei gleichzeitig als Brücke zum Innenraumbus und Diagnosesystem dienen. Über die CAN-B Schnittstelle können Informationen vom $D^2B$-System in andere Systeme beziehungsweise umgekehrt, Daten vom Fahrzeug zum $D^2B$-System übertragen werden. Ein besonders intensiver Austausch findet zwischen Kombiinstrument und dem Netzteilnehmer mit der Masterfunktion statt, da die $D^2B$-Komponenten auch über das Lenkrad bedient werden können und Informationen über das Display des Kombiinstrumentes angezeigt werden.

Sämtliche Audiosignale wie Musik oder Sprache werden von der erzeugenden Komponente zunächst digital über den $D^2B$-Bus entweder zum Netzteilnehmer mit der Masterfunktion, oder ggf. zum Sound-Amplifier übertragen, dort in ein analoges Signal umgewandelt und über die Fahrzeuglautsprecher wiedergegeben. Wird in ein Fahrzeug eine Telefonanlage eingebaut, hat dies den Vorteil, dass zum Freisprechen keine zusätzlichen Lautsprecher untergebracht werden müssen.

Im Gegensatz zur konventionellen Fahrzeugvernetzung sind die Komponenten des Systems nicht in Bus-, Baum- oder Sternstruktur, sondern in einer Ringstruktur miteinander verbunden. Dies bedeutet, dass jeder Ringteilnehmer moduliertes Licht über die Empfangseinrichtung aufnimmt, eine Signalaufbereitung vornimmt, und anschließend über den optischen Ausgang weiterschickt. Der Vorteil dabei ist, dass der Ring um beliebig viele Komponenten erweitert werden kann, da am Ausgang von jedem Gerät die maximale optische Leistung zur Verfügung steht. Bedingt durch die optische Übertragung der Daten erfolgt diese immer unidirektional, also nur in eine Richtung. Vorteilhaft können durch die optische Übertragung Probleme hinsichtlich der EMV vermieden werden.

Die Funktionsweise einer derartigen ringförmigen optischen Netzleitung ist im Detail beispielsweise beschrieben in den VDI-Berichten Nr. 1415 mit dem Titel Elektronik im Kraftfahrzeug, Tagung Baden-Baden, 8. und 9. Oktober 1998 = Electronic systems for vehicles / VDI-Gesellschaft Fahrzeug- und Verkehrstechnik, Düsseldorf: VDI Verlag, 1998 (VDI-Berichte; 1415) ISBN 3-18-091415-7

Die WO 99/12313 offenbart einen ringförmigen optischen Datenbus mit einem Master-Steuergerät und mehreren Slave-Netzteilnehmern, bspw. ein FAX- ein Radio- oder ein Videogerät. Bei einem Verfahren zur Überprüfung der optischen Netzleitung erfolgt ein Aufwecken der Netzteilnehmer über eine elektrische Wake-up-Leitung und der Master versendet danach ein Lichtsignal über den optischen Ring. Empfängt der Master an seinem Interface wieder sein über den Ring gesendetes Lichtsignal, so ist die optische Netzleitung in Ordnung. Jeder Slave, der nach einem Wake-up keine optische Nachricht an seinem Empfänger innerhalb einer Wartezeit erhält, meldet sich als Master mit der Adresse "0" an und sendet diese Adresse über den Ring zum nächsten Slave, der die Adresse um Eins erhöht. Empfängt der Master dann bspw. die optische Nachricht mit der Inkrementierten Adresse "3", so ist das vierte Gerät vor dem Master defekt. Empfängt der Master seine eigene Ursprungsnachricht, so ist das Netzwerk in Ordnung.

Es ist Aufgabe der vorliegenden Erfindung, ein alternatives Verfahren und ein Testgerät dafür vorzuschlagen, um eine solche optische Netzleitung auf mögliche Fehler hin überprüfen zu können.

Diese Aufgabe wird erfindungsgemäß gelöst durch ein Verfahren nach Anspruch 1, wonach eine Überprüfung einer ringförmigen optischen Netzleitung zur Datenübertragung zwischen mehreren Netzteilnehmern in einem Kraftfahrzeug erfolgt, wobei ein Netzteilnehmer eine Masterfunktion wahrnimmt, indem außer der optischen Netzleitung eine weitere Kommunikationsleitung vorhanden ist, die eine sternförmige Struktur aufweist und bei der der Netzteilnehmer mit der Masterfunktion im Zentrum der sternförmigen Struktur angeordnet und über die Kommunikationsleitung mit jedem anderen Netzteilnehmer direkt verbunden ist, wobei eine Überprüfung der optischen Netzleitung erfolgt, indem beim Start des Betriebes der optischen Netzleitung in einem ersten Prüfschritt ein Startsignal an die einzelnen Netzteilnehmer von dem Netzteilnehmer mit der Masterfunktion über die Kommunikationsleitung ausgegeben wird, wobei die einzelnen Netzteilnehmer über die Kommunikationsleitung das Startsignal für den Netzteilnehmer mit der Masterfunktion quittieren, wobei nach dem Startsignal in einem zweiten Prüfschritt von dem Netzteilnehmer mit der Masterfunktion ein Initialisierungssignal über die optische Netzleitung ausgegeben wird, wobei ein ordnungsgemäßer Betriebszustand der ringförmigen optischen Netzleitung erkannt wird, wenn von dem Netzteilnehmer mit der Masterfunktion innerhalb einer vorgegebenen Zeitspanne über die optische Netzleitung ein Signal empfangen wird, das einem Sollsignal entspricht.

Es kann also vorteilhaft zunächst geprüft werden, ob die elektrische Energieversorgung aller Netzteilnehmer gesichert ist und ob die Verbindung über die Kommunikationsleitung realisierbar ist. Im nächsten Schritt kann dann geprüft werden, ob die Kommunikation über die optische Ringleitung realisierbar ist, nachdem die anderen Fehlerquellen ausgeschlossen worden sind.

Das Sollsignal kann dabei dem Initialisierungssignal selbst entsprechen. In diesem Fall wird also in diesem Prüfschritt das Signal von den einzelnen Netzteilnehmern einfach so weirerübertragen (gegebenenfalls verstärkt), wie es empfangen wurde. Es ist ebenso möglich, durch die einzelnen Netzteilnehmer das Signal charakteristisch zu verändern, so dass weiterhin ein ordnungsgemäßes Arbeiten der einzelnen Netzteilnehmer überprüfbar wird.

Bei Unterbrechungen in Bussystemen mit einer Ringstruktur (z.B. $D^2B$ OPTICAL) kommt es im allgemeinen zum Erliegen des gesamten Datenflusses. Dies führt zum Ausfall aller Systeme am Bus. Daraus entsteht nun das Problem, dass im Gegensatz zu Multi-Master-Bus-Systemen (z.B. CAN) das Ansprechen der einzelnen Steuergeräte zur Diagnose des Fehlers über die ringförmige optische Netzleitung nicht mehr möglich ist. Vorteilhaft kann daher mit der vorliegenden Erfindung mit vergleichsweise geringem Aufwand eine Eingrenzung des möglicherweise aufgetretenen Fehlers vorgenommen werden.

Bei dem Verfahren nach Anspruch 1 wird eine Störung der Spannungsversorgung eines Netzteilnehmers bzw. eine Unterbrechung der Verbindung über die Kommunikationsleitung von dem Netzteilnehmer mit der Masterfunktion zu dem Netzteilnehmer erkannt, wenn von dem Netzteilnehmer mit der Masterfunktion keine Quittierung des Startsignals durch den entsprechenden Netzteilnehmer empfangen wird.

Vorteilhaft lässt sich damit eine Fehlerursache eingrenzen.

Bei dem Verfahren nach Anspruch 1 sendet ein Netzteilnehmer ein diesen Netzteilnehmer charakterisierendes Fehlerortungssignal über die Kommunikationsleitung aus, wenn er kein Initialisierungssignal über die optische Netzleitung empfangen hat, wobei von dem Netzteilnehmer mit der Masterfunktion ein Fehler erkannt wird, der die Aussendung eines optischen Signals von dem Netzteilnehmer betrifft, der entgegen der Übertragungsrichtung des Signals in der ringförmigen optischen Netzleitung vor dem Teilnehmer angeordnet ist, der ein Fehlerortungssignal ausgesandt hat und der in Übertragungsrichtung der ringförmigen optischen Netzleitung am nächsten am Netzteilnehmer mit der Masterfunktion angeordnet ist, oder der den Empfang eines optischen Signals durch den Netzteilnehmer betrifft, der das Fehlerortungssignal ausgesandt hat und der in Übertragungsrichtung der ringförmigen optischen Netzleitung am nächsten am Neczteilnehmer mit der Masterfunktion angeordnet ist, oder der die ringförmige optische Netzleitung zwischen dem Netzteilnehmer betrifft, der entgegen der Übertragungsrichtung des Signals in der ringförmigen optischen Netzleitung vor dem Netzteilnehmer angeordnet ist, der das Fehlerortungssignal ausgesandt hat und der in Übertragungsrichtung der ringförmigen optischen Netzleitung am nächsten am Netzteilnehmer mit der Masterfunktion angeordnet ist, und ebendiesem Netzteilnehmer, der das Fehlerortungssignal ausgesandt hat und der in Übertragungsrichtung der ringförmigen optischen Netzleitung am nächsten am Netzteilnehmer mit der Masterfunktion angeordnet ist.

Für die Fehlerortung ist dabei zu beachten, dass die optischen Signale ringförmig umlaufen. Wenn also bei einem Netzteilnehmer kein Signal ankommt, kann von diesem Netzteilnehmer auch kein Signal weitergesandt werden. Von dem Netzteilnehmer mit der Masterfunktion werden bei der Ausgestaltung des Verfahrens nach Anspruch 1, bei dem die Fehlerortungssignale der einzelnen Teilnehmer über die Kommunikationsleitung gesandt werden, Fehlerortungssignale aller Netzteilnehmer empfangen, die in der Übertragungsrichtung der ringförmigen optischen Netzleitung hinter der Störstelle liegen. Im Sinne einer systematischen Fehlersuche wäre also hier zunächst der Fehler zu beheben, der bei dem Netzteilnehmer beobachtet wurde, der in Übertragungsrichtung der ringförmigen optischen Netzleitung am nächsten an dem Netzteilnehmer mit der Masterfunktion angeordnet ist. Nach Behebung dieses Fehlers kann ein erneuter Prüfvorgang vorgenommen werden. Die anderen Fehlereinträge können lediglich darauf beruhen, dass von dem einen Netzteilnehmer keine Signale weitergesandt werden konnten, weil dieser Teilnehmer keine Signale empfangen konnte. Es müssen also keine weiteren Störungen auf der ringförmigen optischen Netzleitung vorhanden sein.

Optional sendet ein Netzteilnehmer ein diesen Netzteilnehmer charakterisierendes Fehlersignal über die optische Netzleitung aus, wenn er kein Initialisierungssignal über die optische Netzleitung empfangen hat, wobei von dem Netzteilnehmer mit der Masterfunktion bei einem Empfang dieses Fehlersignals ein Fehler erkannt wird, der die Aussendung eines optischen Signals von dem Netzteilnehmer betrifft, der entgegen der Übertragungsrichtung des Signals in der ringförmigen optischen Netzleitung vor dem Teilnehmer angeordnet ist, der ein Fehlersignal ausgesandt hat, oder der den Empfang eines optischen Signals durch den Netzteilnehmer betrifft, der das Fehlersignal ausgesandt hat, oder der die ringförmige optische Netzleitung zwischen dem Netzteilnehmer betrifft, der entgegen der Übertragungsrichtung des Signals in der ringförmigen optischen Netzleitung vor dem Netzteilnehmer angeordnet ist, der das Fehlersignal ausgesandt hat, und ebendiesem Netzteilnehmer, wobei von dem Netzteilnehmer mit der Masterfunktion ein Fehler erkannt wird, der die Aussendung eines optischen Signals von dem Netzteilnehmer betrifft, der entgegen der Übertragungsrichtung des Signals in der ringförmigen optischen Netzleitung vor dem Netzteilnehmer mit der Masterfunktion angeordnet ist oder der den Empfang eines optischen Signals durch den Netzteilnehmer mit der Masterfunktion betrifft oder der die ringförmige optische Netzleitung zwischen dem Netzteilnehmer betrifft, der entgegen der Übertragungsrichtung des Signals in der ringförmigen optischen Netzleitung vor dem Netzteilnehmer mit der Masterfunktion angeordnet ist, und ebendiesem Netzteilnehmer, wenn von dem Netzteilnehmer mit der Masterfunktion kein Fehlersignal empfangen wird.

Optional wird also die Fehlereingrenzung vorgenommen, indem ein Signal über die ringförmige optische Netzleitung gesandt wird. Unter Umständen kann es sein, dass die Signalübertragung durch die ringförmige optische Netzleitung an mehreren Stellen unterbrochen ist. Hier wird aufgrund der Übertragung des Fehlersignals über die ringförmige optische Netzleitung ein Fehler zunächst an der Stelle erkannt, die entgegen der Übertragungsrichtung in der ringförmigen optischen Netzleitung am dichtesten an dem Netzteilnehmer mit der Masterfunktion aufgetreten ist. Nach Behebung dieses Fehlers kann dann nach eventuellen weiteren Fehlern gesucht werden.

Bei den Verfahren kann anhand verschiedener Kriterien von dem jeweiligen Netzteilnehmer erkannt werden, dass dieser kein Initialisierungssignale empfangen hat. Zum einen können dafür Zeitkriterien festgelegt werden derart, dass ein Netzteilnehmer erkennt, dass er kein Initialisierungssignal empfangen hat, wenn nach Ablauf einer bestimmten Zeitschwelle, nachdem der Netzteilnehmer das Startsignal über die Kommunikationsleitung empfangen hat, noch kein Initialisierungssignal von diesem Netzteilnehmer empfangen wurde. Es ist auch möglich, von dem Netzteilnehmer mit der Masterfunktion ein Fehlerquittierungssignal über die Kommunikationsleitung auszusenden, wenn von dem Netzteilnehmer mit der Masterfunktion nach Aussenden des Initialisierungssignals innerhalb einer bestimmten Zeitschwelle noch kein Signal über die ringförmige optische Netzleitung empfangen wurde bzw. nur ein Signal, das nicht dem Sollsignal entspricht.

Es sind mittels eines Testgerätes ein Empfänger oder ein Sender eines Netzteilnehmers in deren Funktion in der Start- und Initialisierungsphase ersetzbar.

Es ist mittels eines Testgerätes ein Netzteilnehmer mit dem jeweils zugehörigen Empfänger und Sender in dessen Funktion in der Start- und Initialisierungsphase ersetzbar.

Es können vorteilhaft im Sinne einer systematischen Fehlersuche nach einer Eingrenzung des Fehlers einzelne Komponenten ersetzt werden. Indem dann der Test wiederholt wird, kann überprüft werden, ob das Netz nach dem Austausch funktioniert. Dadurch kann eine fehlerhafte Komponenten ermittelt werden.

Durch den im Vergleich zum Normalbetrieb des Netzes reduzierten Funktionsumfang des Testgerätes kann vorteilhaft der Aufwand hinsichtlich der Logistik minimiert werden, weil mit einem Testgerät die Netzteilnehmer in der Prüfphase ersetzbar sind.

Nachfolgend soll ein Ausführungsbeispiel der Erfindung nochmals anhand der Zeichnungen erläutert werden. Es zeigt dabei:

Fig. 1    Eine Prinzipdarstellung einer Anordnung mit einer ringförmigen optischen Netzleitung und einer Kommunikationsleitung,

Fig. 2    Einen Ablauf eines Prüfverfahrens und

Fig. 3    Eine Prinzipdarstellung, wie ein Testgerät einzelne Teile des Netzes ersetzen kann.

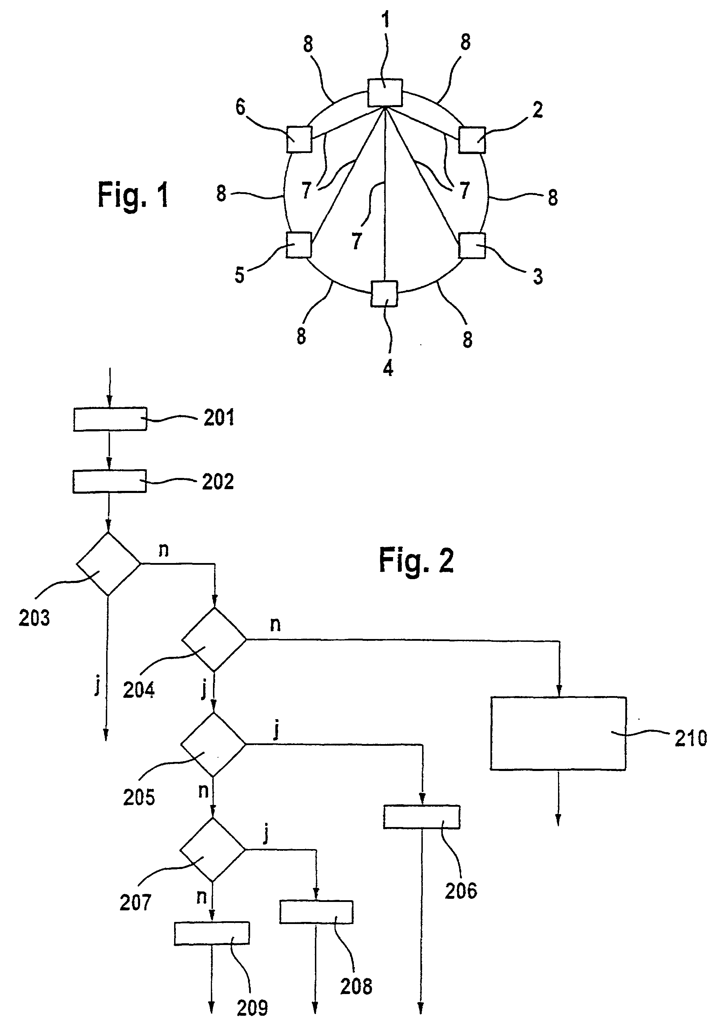

Anhand von Figur 1 soll im folgenden die Anordnung erläutert werden. Ein Start des voll ausgestatteten Systems und damit eine Durchführung der Funktionsprüfung kann durch verschiedene Aktivitäten oder Ereignisse ausgelöst werden.

- Einschalten des Netzteilnehmers mit der Masterfunktion 1, also durch Drücken des Einschaltknopfes, Stecken oder Drehen des Zündschlüssels derart, dass die Zündung eingeschaltet wird.
- Über das Handy oder Telefon, z.B. durch einen ankommenden Anruf oder Wahl einer Telefonnummer.

Da die derzeit verwendeten elektrisch-optischen Wandlerelemente (FOT's) der Geräte 1-6 im eingeschalteten Zustand einen zu hohen Ruhestromverbrauch verursachen, wird der $D^2B$-Bus und damit die FOT's im Nichtbedarfsfall abgeschaltet. Der Start der optischen Übertragung erfolgt über eine zusätzliche Kommunikationsleitung 7, die als Kupferleitung ausgebildet ist und nachfolgend als "Wake-up" Leitung bezeichnet wird.

Wurde eine der oben angeführten Einschaltbedingungen erfüllt, sendet die jeweilige Komponente einen Wake-up Impuls an alle Ringteilnehmer. Dazu wird die Wake-up Leitung zwischen 50-100ms auf Low-Pegel gezogen.

Kurz nach dem Wake-up Impuls beginnt der Netzteilnehmer mit der Masterfunktion 1 ein Initialisierungssignal über die ringförmige optische Netzleitung 8 auszusenden. Ist die ringförmige optische Netzleitung 8 geschlossen und liegt kein elektrischer Fehler vor, wird die Empfangsseite des Netzteilnehmers mit der Masterfunktion 1 innerhalb von 500ms locken, d.h. moduliertes Licht empfangen. Dadurch ist die Kommunikation zwischen den Geräten 1-6 über die ringförmige optische Netzleitung 8 möglich.

Als erstes sendet der Netzteilnehmer mit der Masterfunktion 1 die sogenannte Sollpositionsnachricht aus. Anhand dieser Nachricht ermitteln die Geräte 2-6 ihre Knotenadresse und geben diese per Istpositionsnachricht dem Netzteilnehmer mit der Masterfunktion 1 bekannt.

Der nächste Schritt während der Hochlaufphase des Systems ist das Initialisieren der Geräteadressen. Die einzelnen Komponenten 1-6 senden eine Nachricht an ihre eigene zuletzt im Speicher abgelegte Geräteadresse, um zu überprüfen, ob andere Busteilnehmer mit der selben Adresse im Ring vorhanden sind. Ist dies nicht der Fall, wird diese voreingestellte Adresse unverändert abgespeichert.

Nach Ablauf der beschriebenen Vorgänge, geht das System in den normalen Betriebszustand über.

Die Diagnose der D$^2$B Komponenten wie z.B. Telefon, CD-Wechsler und Sprachbedienungssteuergerät wird mit Hilfe eines Testgeräts durchgeführt. Das Testgerät ist über eine Kommunikationsleitung 8 mit dem Netzteilnehmer mit der Masterfunktion 1 (Radio) verbunden. Der Netzteilnehmer mit der Masterfunktion 1 dient als Verbindung zwischen dem Testgerät und den anderen Busteilnehmern 2-6, und leitet die Testgerätanforderung über die ringförmige optische Netzleitung 8 an das adressierte Steuergerät 2-6 weiter. Die Antwort des Steuergerätes 2-6 gelangt auf umgekehrten Weg vom Steuergerät 2-6 über den als Verbindung zum Testgerät verwendeten Netzteilnehmer mit der Masterfunktion 1 zum Testgerät.

Alle Systemfehler wie z.B. Unterbrechung der ringförmigen optischen Netzleitung 8 oder funktionaler Ausfall von Geräten 2-6, die durch das Netzwerkmanagement erkannt werden, sind direkt in dem als Verbindung zum Testgerät verwendeten Netzteilnehmer mit der Masterfunktion 1 abgelegt.

Allen diagnoscizierbaren Fehlern ist ein Code zugeordnet. Tritt ein Fehler in einer Komponente auf, kann dieser über das Testgerät ausgelesen und am Bildschirm mittels Angabe des Fehlercodes und kurzer Beschreibung angezeigt werden. Abgelegte Fehler können mit dem Testgerät gelöscht werden.

Um eine Diagnose starten zu können, muss der Netzteilnehmer mit der Masterfunktion 1 eingeschaltet sein. Als nächster Schritt fordert das Testgerät einen Kommunikationsaufbau zum Testgerät an. Der als Verbindung zum Testgerät verwendete Netzteilnehmer mit der Masterfunktion 1 teilt mittels einer Nachricht den Ringteilnehmern 2-6 mit, dass die Verbindung zum Testgerät existiert. Nach Erkennen dieser Nachricht schaltet jede Komponente 2-6 in den Diagnosemodus.

Informationen wie z.B. Baureihe, Ländervariante, Ausstattung, Soll/Ist-Konfiguration, werden in dem als Verbindung zum Testgerät verwendeten Netzteilnehmer mit der Masterfunktion 1 abgelegt. Diese Variantencodierung wird vom Testgerät an den als Verbindung zum Testgerät verwendeten Netzteilnehmer mit der Masterfunktion 1 gesendet und dort in einem nicht flüchtigen Speicher abgelegt. Der als Verbindung zum Testgerät verwendete Netzteilnehmer mit der Masterfunktion 1 leitet diese Informationen auf Anfrage der Steuergeräte 2-6 weiter. Damit ist eine fahrzeugspezifische Selbstkonfiguration der Geräte 2-6 möglich.

Nach der Montage des LWL-Leitungssatzes und aller Steuergeräte 2-6, kann eine Inbetriebnahme des D$^2$B-Systems vorgenommen werden.

Lässt sich das System nicht einschalten, kann dies unterschiedliche Ursachen haben:

➢ Elektrischer Fehler liegt vor z.B. Unterbrechung der Spannungsversorgung oder der Kommunikationsleitung bei einer oder mehrerer Komponenten; Steckverbindungen sind nicht gesteckt

➢ Optischer Fehler z.B. Unterbrechung des optischen Ringes an beliebiger Stelle; Empfangs- oder Sendedioden defekt; opt. Steckverbindungen nicht gesteckt

Vorteilhaft zeigt sich bei der vorliegenden Erfindung, dass mit dem Testgerät, das mit dem Netzteilnehmer mit der Masterfunktion verbunden ist, ohne Zuhilfenahme von aufwendigem Equipment bereits die meisten Fehlerbilder erkannt werden können.

Zur Lokalisierung eines elektrischen Fehlers besteht die Möglichkeit, einen Wake-up Test durchzuführen. Der Wake-up Test kann beispielsweise über das Testgerät gestartet werden. Von dem Netzteilnehmer mit der Masterfunktion 1 wird ein Wake-up Impuls mit 500ms Dauer ausgesandt. Dieses Startsignal wird von den anderen Geräten 2-6 als Start für die Diagnose der Kommunikationsleitung 7 interpretiert. Nach 150ms zieht die Komponente 2 die Kommunikationsleitung 7 für 50ms auf Low-Pegel und zeigt hiermit ihr Vorhandensein an. Nach 350ms führt Komponente 3 den selben Vorgang durch usw. Der Netzteilnehmer mit der Masterfunktion 1 beobachtet diese Abläufe und kann somit die Existenz der verschiedenen Komponenten 2-6 mitprotokollieren, indem sie die abgetasteten Zeitwerte in einem Speicherblock ablegt. Der Test geht dabei nur, wenn der Ring nicht funktioniert.

Der Speicher wird anschließend vom Testgerät ausgelesen und das Ergebnis am Bildschirm angezeigt.

Die unterschiedlichen Geräte 2-6 müssen sich nach genau festgelegten Zeiten daher in bestimmter Reihenfolge per Impuls melden.

$$t = 150ms +(i-1)x(50ms+150ms)$$

i=1    CD-Wechsler
i=2    Telefon
i=3    Sprachbedienung
i=4    Amplifier Soundsystem
i=5    Handy

Befindet sich der Impuls an einer anderen Stelle oder liegt die Impulsdauer außerhalb der Toleranzgrenze, kann der Netzteilnehmer mit der Masterfunktion 1 das Ergebnis nicht richtig interpretieren. Ein Fehler ist nun sehr leicht feststellbar, da jeder Impuls einer $D^2B$-Komponente 2-6 entspricht. Meldet sich ein Gerät 2-6 nicht, ist entweder die Kommunikationsleitung 7 unterbrochen oder die Spannungsversorgung defekt.

Kann aufgrund einer Unterbrechung der ringförmigen optischen Netzleitung 8 die Inbetriebnahme des Systems nicht durchgeführt werden, beginnt der sogenannte Start-Fehler-Zyklus zu laufen.

Wie bereits beschrieben sendet der Netzteilnehmer mit der Masterfunktion 1, nachdem eine Einschaltbedingung erfüllt wurde, einen Wake-up Impuls als Startsignal über die Kommunikationsleitung 7 an alle Teilnehmer 2-6 des Ringes und beginnt, ein Initialisierungssignal über die ringförmige optische Netzleitung 8 auszusenden. Kommt innerhalb von 500ms kein Licht bei der Empfängerdiode (RX-Diode) an, wird der Timer in dem Netzteilnehmer mit der Masterfunktion 1 zurückgesetzt und der Vorgang wiederholt. Empfängt die RX-Diode nach dem vierten Versuch kein Licht, wechselt der Netzteilnehmer mit der Masterfunktion 1 vom Master- in den Slavemodus. Hat die erste Komponente 2-6 nach der Bruchstelle bereits vier Wake-up Signale und nach einer anschließenden Wartezeit von 1000ms noch immer kein Initialisierungssignal empfangen, wechselt sie vom Slave- in den Mastermodus, und sendet eine sogenannte Sollpositionsnachricht aus. Alle nachfolgenden Komponenten 2-6 tragen ihre Position ein. Der Netzteilnehmer mit der Masterfunktion 1 kann aus dieser Nachricht die Anzahl der Teilnehmer nach der Bruchstelle ermitteln und somit in Busrückwärtsrichtung das letzte funktionierende Steuergerät 2-6 ermitteln. Der Netzteilnehmer mit der Masterfunktion 1 schreibt die festgestellten Daten in einen Speicher, der wiederum vom Testgerät ausgelesen und am Bildschirm angezeigt werden kann.

Das Testgerät kann vorteilhaft erkennen, ob es in einem Ring mit nominalem Datenverkehr (aktives $D^2B$ OPTICAL-System mit Nutzdatenverkehr) ist und leitet dann die empfangseitigen Daten an das nachfolgende Bus-Segment weiter. Diese Funktion lässt sich mit dem beschriebenen Verfahren zur Lokalisierung von defekten Komponenten in $D^2B$ OPTICAL Systemen kombinieren, um einen Fehler lokal eingrenzen zu können.

Grundsätzlich wird bei der Fehlererkennung folgendermaßen vorgegangen:

Schritt 1:
Mittels der fahrzeugseitigen Diagnose wird ermittelt, ob ein Segment im Ring defekt ist. Weiterhin wird ermittelt, welches das defekte Segment im Ring ist.

Schritt 2 - 4:
Mittels des Sonderwerkzeugs "$D^2B$-Netzwerktester" wird die defekte Komponente des Segments ermittelt.

Schritt 5:
Bei Mehrfachfehlern muss nach der Durchführung der Schritte 2-4 geprüft werden, ob ein weiterer Fehler vorliegt und ggf. mit Schritt 1 wiederbegonnen werden.

Die Schritte 1 bis 4 sind jeweils mehrteilig.
Anhand der Figur 2 soll im folgenden der Verfahrensablauf erläutert werden. In dem Verfahrensschritt 201 sendet der Netzteilnehmer mit der Masterfunktion 1 ein Startsignal über die Kommunikationsleitung. Von den einzelnen Netzteilnehmern wird dieses Startsignal über die Kommunikationsleitung quittiert, wobei diese Quittierung von dem Netzteilnehmer mit der Masterfunktion 1 ausgewertet wird. Das Ergebnis dieser Auswertung ist eine Tabelle mit Steuergeräten, welche sich angemeldet haben (Ist-Zustand). Diese Tabelle wird dann mit einer weiteren Tabelle mit Steuergeräten verglichen, welche sich angemeldet haben sollten (Soll-Zustand). Der Sollzustand wurde als Konfigurationsdatum bei der Inbetriebnahme des $D^2B$ OPTICAL Systems einprogrammiert. Bei einer Abweichung kann dann ein Fehler in der Spannungsversorgung eines Netzteilnehmers oder bei der Verbindung über die Kommunikationsleitung zu diesem Netzteilnehmer erkannt werden. In einem extern auslesbaren Speicher, vorzugsweise in dem Netzteilnehmer mit der Masterfunktion 1, wird ggf. ein Fehlerzustand gespeichert.

In dem Schritt 202 wird dann von dem Netzteilnehmer mit der Masterfunktion 1 ein Initialisierungssignal über die ringförmige optische Netzleitung 8 ausgesandt. Vorteilhafterweise kann ein Netzteilnehmer auch durch dieses Initialisierungssignal aktiviert werden, wenn von diesem Netzteilnehmer kein Startsignal empfangen wurde. Dies erweist sich dann als vorteilhaft, wenn die Verbindung über die Kommunikationsleitung 7 von dem Netzteilnehmer mit der Masterfunktion zu dem entsprechenden Netzteilnehmer unterbrochen ist, der Netzteilnehmer einschließlich seiner Anbindung an die ringförmige optische Netzleitung 8 im übrigen aber einwandfrei funktioniert. In diesem Fall kann während des normalen Betriebes eine Kommunikation über die ringförmige optische Netzleitung erfolgen. Bei einer Wartung kann dann der Fehler behoben werden.

In dem Schritt 203 wird dann überprüft, ob von dem Netzteilnehmer mit der Masterfunktion 1 ein Sollsignal empfangen wurde. Wenn die einzelnen Netzteilnehmer in der Initialisierungsphase bei einem ordnungsgemäßen Betrieb das Initialisierungssignal weitersenden, ohne dies zu verändern, entspricht dieses Sollsignal dem Initialisierungssignal. Wenn das Initialisierungssignal von den einzelnen Netzteilnehmern charakteristisch verändert wird, um eventuell weitere Fehlerzustände erkennen zu können, entspricht dieses Sollsignal bestimmten Veränderungen des Initialisierungssignals.

wenn das Sollsignal empfangen wurde, kann zu einem normalen Betriebszustand übergegangen werden, weil eine Kommunikation über die ringförmige optische Netzleitung möglich ist.

Andernfalls erfolgt ein Übergang zu dem Schritt 204, in dem von dem Netzteilnehmer, von dem das Initialisierungssignal nicht empfangen werden konnte, ein Fehlersignal über die ringförmige optische Netzleitung ausgesandt wird. Wenn von dem Netzteilnehmer mit der Masterfunktion 1 ein solches Fehlersignal empfangen wird, kann über die in dem Netzteilnehmer mit der Masterfunktion 1 abgelegte Reihenfolge der Netzteilnehmer (Soll-Zustand der angemeldeten Geräte) das "letzte noch funktionierende Segment" des Rings erkannt werden. Dies kann fahrzeugseitig im Netzteilnehmer mit der Masterfunktion oder im Testgerät durchgeführt werden. Die Schlussfolgerung ist dann, dass das Segment, welches logisch vor dem letzten noch funktionierenden liegt (d. h. das Segment, das entgegen der Übertragungsrichtung der ringförmigen optischen Netzleitung vor dem letzten noch funktionierenden Segment liegt), einen Defekt haben muss, da sonst auch dieses Segment als in Ordnung erkannt wird. Allerdings ist bis hierhin noch nicht klar, welche Komponenten dieses Segments (Sender, Empfänger, Lichtwellenleiter inkl. Kontaktierung) den Fehler verursacht haben.

Es erfolgt ein Übergang zu dem Schritt 205, in dem die defekte Komponente ermittelt wird. Dies geschieht gegebenenfalls in mehreren Schritten, welche jeweils aufgrund der Ergebnisse eine determinierte Entscheidung für den eventuell noch notwendigen nächsten Schritt zulassen.

Im defekten Segment wird zuerst der Empfänger ermittelt und dann durch ein Testgerät ersetzt. Nun wird durch Einschalten des Netzteilnehmers mit der Masterfunktion der Ring geweckt und ein Bus-Hochlauf erzwungen. Mittels des Testgerätes wird dabei überprüft, ob das empfangene Signal ausreichend ist. Ist dies der Fall, wird angezeigt (Schritt 206), dass der Empfänger, der durch das Testgerät ersetzt wurde, defekt ist.

In diesem Falle wird nach einem erneuten Einschalten des Netzteilnehmers mit der Masterfunktion der Ring hoch laufen und es werden alle verbleibenden Steuergeräte (Netzteilnehmer) funktionieren, da das Testgerät das ersetzte Steuergerät dahingehend simuliert, dass die Daten vom Sender an den Empfänger des nächsten Segments weitergeleitet werden (Repeater). Die Fehlersuche ist damit zu Ende.

Ergab sich bei der Überprüfung mittels des Testgeräts, dass kein Signal, ein zu schwaches Signal oder ein Signal, das nicht dem Initialisierungssignal entspricht, empfangen wurde, so ist der Empfänger vermutlich in Ordnung und die defekte Komponente grenzt sich auf Lichtwellenleiter und Sender ein.

Zusätzlich oder alternativ zum Empfänger wird nun im Schritt 207 der Sender des defekten Segments mit einem weiteren D$^2$B-Netzwerkrester ersetzt. Nun wird durch Einschalten des Netzteilnehmers mit der Masterfunktion der Ring geweckt und ein Bus-Hochlauf erzwungen. Es lässt sich dann beispielsweise durch einen ordnungsgemäßen Empfang durch den Netzteilnehmer mit der Masterfunktion feststellen, ob eine Kommunikation über die ringförmige optische Netzleitung jetzt möglich ist. Der Fehler lässt sich dann auf den entsprechenden Sender des Segments eingrenzen. Es kann auch das Signal des Testgerätes ausgewertet werden, das (nach wie vor) den Empfänger ersetzt. wird dieses Signal jetzt als ausreichend erkannt, kann ebenfalls auf einen defekten Sender geschlossen werden. In diesem Falle wird nach dem Einschalten des Netzteilnehmer mit der Masterfunktion der Ring hoch laufen und es werden alle verbleibenden Steuergeräte funktionieren. Der Fehlerfall wird dann im Schritt 208 angezeigt. Die Fehlersuche ist dann zu Ende.

Konnte das Initialisierungssignal nach wie vor nicht oder nicht richtig empfangen werden, so ist außer dem Empfänger weiterhin der Sender vermutlich in Ordnung und die defekte Komponente grenzt sich auf den Lichtwellenleiter ein. Dies wird in dem Schritt 209 angezeigt.

Nach einem Austauschen des Lichtwellenleiters wird ein erneuter Startversuch gemacht. Es ist zu erwarten, dass das System dann ordnungsgemäß funktioniert.

Ist dies dennoch nicht der Fall, deutet dies auf einen intermittierenden Fehler hin bzw. auf einen Sender mit schwankender Sendeleistung (defekte Sendeleistungsregelung) hin. In diesem Fall ist es empfehlenswert, den Sender zu tauschen und das Fahrzeug zu beobachten. Fällt der Ring abermals aus, so muss der Lichtwellenleiter zusätzlich getauscht werden.

Konnte im Schritt 204 kein Fehlersignal von dem Netzteilnehmer mit der Masterfunktion 1 empfangen werden, kann geschlossen werden, dass der Empfänger des Netzteilnehmers mit der Masterfunktion 1, der Sender des Gerätes, das entgegen der Übertragungsrichtung der ringförmigen optischen Netzleitung vor dem Netzteilnehmer mit der Masterfunktion 1 angeordnet ist oder der Lichtwellenleiter zwischen diesem Gerät und dem Netzteilnehmer mit der Masterfunktion defekt ist. Die weitere Fehlersuche wird in dem Ablaufdiagramm durch einen Block 210 angedeutet, der in seinen Bestandteil hinsichtlich der Vorgehensweise der einzelnen Prüfschritte den entsprechenden Schritten 205 bis 209 entspricht.

Nun wird, nachdem die defekte Komponente des Rings im defekten Segment ermittelt und ausgetauscht wurde, abermals mit Schritt 201 begonnen, da im Ring noch ein weiteres Segment defekt sein könnte.

Durch eine Kombination der Auswertung der erkannten Fehlerzustände über die Kommunikationsleitung und die ringförmige optische Netzleitung lässt sich ein Fehler u.U. von vorneherein enger eingrenzen. Hat sich ein Netzteilnehmer über die Kommunikationsleitung nicht gemeldet und wird der Netzteilnehmer, der in Übertragungsrichtung der optischen Netzleitung diesem Teilnehmer liegt, als der letzte ordnungsgemäß funktionierende Teilnehmer erkannt, kann mit einer größeren Wahrscheinlichkeit geschlossen werden, dass eine Störung bei dem Teilnehmer vorliegt, der sich nicht über die Kommunikationsleitung gemeldet hat, so dass dessen Komponenten zuerst untersucht werden können. In dem beschriebenen Fall kann dann darauf geschlossen, dass mit überwiegender Wahrscheinlichkeit die Spannungsversorgung gestört ist, weil dies eine Störung ist, mit der sich die mitgeteilten Fehlerzustände über die Kommunikationsleitung und auch die ringförmige optische Netzleitung erklären lassen.

Das Testgerät kann so ausgebildet sein, dass es den Empfänger und den Sender einzeln ersetzen kann. Im Sinne einer Vereinheitlichung kann das Testgerät auch so ausgebildet sein, dass es einen Netzteilnehmer vollständig ersetzen kann für die Start- und Initialisierungsphase. In diesem Fall ist das Testgerät mit einem Empfänger, einer Signalaufbereitungsschaltung und einem Sender ausgestattet. Da Empfänger und Sender eines Segmentes unterschiedlichen Netzteilnehmer zugeordnet sind, kann durch ein solches Ersetzen ebenfalls eindeutig der Fehler erkannt werden.

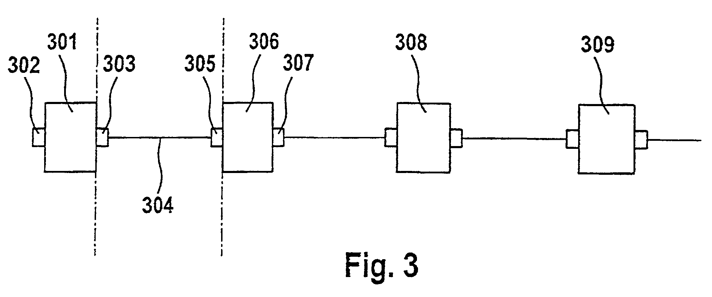

Zur Erläuterung dieser Verhältnisse zeigt Figur 3 Netzteilnehmer 301, 306, 308 und 309, die über die ringförmige optische Netzleitung verbunden sind, von der ein Teil mit der Bezugsziffer 304 versehen ist. Der Netzteilnehmer 301 weist einen Empfänger 303 auf sowie einen Sender 302. Der Netzteilnehmer 306 weist einen Empfänger 307 auf und einen Sender 305. Durch die strichpunktierten Linien ist angedeutet, dass ein Segment, in dem möglicherweise ein Fehler aufgetreten sein kann, aus den Elementen 303, 304 und 305 bestehen kann. Im Sinne einer systematischen Fehlersuche kann das Testgerät so ausgestaltet sein, dass es den Empfänger 303 ersetzen kann oder den Sender 305. Das Testgerät kann auch so ausgestaltet sein, dass es einen Netzteilnehmer 301, 306, 308 und 309 mitsamt dem zugehörigen Empfänger und Sender ersetzen kann. Bei einer Fehlersuche in dem beschriebenen Segment wird zuerst der Netzteilnehmer 301 ersetzt, wodurch aufgrund der vorhergehenden Fehlereingrenzung überprüfbar wird, ob der Empfänger 303 defekt ist. Indem der Netzteilnehmer 306 ersetzt wird, wird aufgrund der vorhergehenden Fehlereingrenzung überprüfbar, ob der Sender 305 defekt ist.

**Patentansprüche**

1. Verfahren zur Überprüfung einer ringförmigen optischen Netzleitung (8) zur Datenübertragung zwischen mehreren Netzteilnehmern (1-6, 301, 306, 308, 309) in einem Kraftfahrzeug, wobei ein Netzteilnehmer (1) eine Masterfunktion wahrnimmt, außer der optischen Netzleitung (8) eine weitere Kommunikationsleitung (7) vorhanden ist, über die der Netzteilnehmer (1) mit der Masterfunktion mit jedem anderen Netzteilnehmer (2-6) verbunden ist, und wobei beim Start des Betriebes der optischen Netzleitung (8) in einem ersten Prüfschritt ein Startsignal an die einzelnen Netzteilnehmer (2-6) von dem Netzteilnehmer (1) mit der Masterfunktion über die Kommunikationsleitung (7) ausgegeben wird, wobei nach dem Startsignal in einem zweiten Prüfschritt von dem Netzteilnehmer (1) mit der Masterfunktion ein Initialisierungssignal über die optische Netzleitung (8) ausgegeben wird (202), wobei ein ordnungsgemäßer Betriebszustand der ringförmigen optischen Netzleitung (8) erkannt wird, wenn von dem Netzteilnehmer (1) mit der Masterfunktion innerhalb einer vorgegebenen Zeitspanne über die optische Netzleitung (8) ein Signal empfangen wird, das einem Sollsignal entspricht (203) **dadurch gekennzeichnet, dass**

eine Überprüfung der optischen Netzleitung (8) oder der Netzteilnehmer (2-6) außerdem erfolgt, indem in dem ersten Prüfschritt beim Start des Betriebes der optischen Netzleitung (8) das Startsignal über die Kommunikationsleitung (7) mit einer sternförmigen Struktur an die einzelnen Netzteilnehmer (2-6) ausgegeben wird, wobei der Netzteilnehmer (1) mit der Masterfunktion wegen der Anordnung im Zentrum der sternförmigen Struktur direkt mit den Netzteilnehmern (2-6) verbunden wird, dass eine Störung der Spannungsversorgung eines Netzteilnehmers (2-6) oder eine Unterbrechung der Verbindung über die Kommunikationsleitung (7) von dem Netzteilnehmer (1) mit der Masterfunktion zu dem Netzteilnehmer (2-6) erkannt wird, wenn von dem Netzteilnehmer (1) mit der Masterfunktion keine Quittierung des Startsignals durch den entsprechenden Netzteilnehmer (2-6) empfangen wird (201) und dass in einem dritten Prüfschritt ein Netzteilnehmer (2-6) ein für diesen charakteristisches Fehlerortungssignal über die Kommunikationsleitung (7) an den Netzteilnehmer (1) mit der Masterfunktion sendet, wenn er kein Initialisierungssignal empfangen hat.

2. Verfahren nach Anspruch 1, **dadurch gekennzeichnet, dass** durch den Netzteilnehmer (1) mit der Masterfunktion ein Fehler bei dem Netzteilnehmer (2-6) erkannt wird, der entgegen der Übertragungsrichtung des Signals in der ringförmigen optischen Netzleitung vor dem Netzteilnehmer (2-6) angeordnet ist, der das Fehlerortungssignal zurückgesandt hat.

3. Verfahren nach Anspruch 1, **dadurch gekennzeichnet, dass** die einzelnen Netzteilnehmer (2-6) das Startsignal über die Kommunikationsleitung (7) für den Netzteilnehmer (1) mit der Masterfunktion quittieren (201).

## Claims

**1.** Method for checking an optical ring network line (8) for data transmission between a plurality of network users (1-6, 301, 306, 308, 309) in a motor vehicle, whereby one network user (1) takes a master function, whereby a further communication line (7) is provided in addition to the optical network line (8), via which the network user (1) with the master function is connected to all other network users (2-6), and whereby at the start of the operation of the optical network line (8) a start signal is output by the network user (1) with the master function to the individual network users (2-6) in a first checking step, whereby after the start signal an initialising signal is output by the network user (1) with the master function via the optical network line (8) in a second checking step, whereby a proper operating state of the optical ring network line (8) is detected if the network user (1) with the master function receives a signal corresponding to a reference signal (203) via the optical network line (8) within a preset period of time, **characterised in that** a check of the optical network line (8) or the network users (2-6) is further completed by outputting the start signal at the start of the operation of the optical network line (8) via the communication line (7) with a star structure to the individual network users (2-6) in the first checking step, whereby the network user (1) with the master function, owing to its location in the centre of the star structure, is directly connected to the network users (2-6), **in that** a fault in the voltage supply of a network user (2-6) or an interruption of the connection via the communication line (7) between the network user (1) with the master function and the network users (2-6) is detected whenever the network user (1) with the master function does not receive an acknowledgement of the start signal from the relevant network user (2-6) (201), and **in that** a network user (2-6) sends a characteristic fault location signal via the communication line (7) to the network user (1) with the master function in a third checking step, if no initialising signal has been received.

**2.** Method according to claim 1, **characterised in that** the network user (1) with the master function detects a fault in the network user (2-6) which, against the direction of signal transmission in the optical ring network line, is located in front of the network user (2-6) which has returned the fault location signal.

**3.** Method according to claim 1, **characterised in that** the individual network users (2-6) acknowledge the start signal via the communication line (7) for the network user (1) with the master function.

## Revendications

**1.** Procédé pour le contrôle d'une ligne de réseau (8) optique en anneau pour la transmission de données entre plusieurs abonnés du réseau (1-6, 301, 306, 308, 309) dans un véhicule à moteur, un abonné du réseau (1) assumant une fonction maître, une autre ligne de communication (7) étant présente en dehors de la ligne de réseau (8) optique, ligne par laquelle l'abonné du réseau (1) avec la fonction maître est relié à tout autre abonné du réseau (2-6), et un signal de démarrage étant envoyé aux différents abonnés du réseau (2-6) par l'abonné du réseau (1) avec la fonction maître par la ligne de communication (7) lors du démarrage de l'exploitation de la ligne de réseau (8) optique dans une première étape de contrôle, un signal d'initialisation étant envoyé par l'abonné du réseau (1) avec la fonction maître par la ligne de réseau (8) optique après le signal de démarrage lors d'une seconde étape de contrôle (202), un état de service correct de la ligne de réseau (8) optique en anneau étant détecté lorsqu'un signal, qui correspond à un signal prévu (203), est reçu par l'abonné du réseau (1) avec la fonction maître dans un laps de temps prédéfini par la ligne de réseau (8) optique, **caractérisé en ce qu'**un contrôle de la ligne de réseau (8) optique ou des abonnés du réseau (2-6) s'effectue également par le fait que, lors de la première étape de contrôle et lors du démarrage de l'exploitation de la ligne de réseau (8) optique, le signal de démarrage est envoyé par la ligne de communication (7) avec une structure en forme d'étoile aux abonnés du réseau (2-6) individuels, l'abonné du réseau (1) avec la fonction maître étant relié du fait de l'agencement au centre de la structure en forme d'étoile directement aux abonnés du réseau (2-6), **en ce qu'**une perturbation de l'alimentation en tension d'un abonné du réseau (2-6) ou une interruption de la liaison par la ligne de communication (7) de l'abonné du réseau (1) avec la fonction maître à l'abonné du réseau (2-6) est détectée lorsque aucun acquittement du signal de démarrage n'est reçu de l'abonné du réseau (1) avec la fonction maître par l'abonné du réseau (2-6) correspondant, et **en ce que**, dans une troisième étape du contrôle, un abonné du réseau (2-6) envoie un signal de localisation d'erreur caractéristique de cette étape par la ligne de communication (7) à l'abonné du réseau (1) avec la fonction maître (201) lorsqu'il n'a pas reçu de signal d'initialisation.

**2.** Procédé selon la revendication 1, **caractérisé en ce que** l'abonné du réseau (1) avec la fonction maître détecte une erreur chez l'abonné du réseau (2-6) qui est disposé dans le sens contraire au sens de transmission du signal dans la ligne de réseau optique en forme d'anneau avant l'abonné du réseau (2-6) qui a retourné le signal de localisation d'erreur.

3. Procédé selon la revendication 1, **caractérisé en ce que** les abonnés du réseau (2-6) individuels acquittent le signal de démarrage par la ligne de communication (7) pour l'abonné du réseau (1) avec la fonction maître (201).

## Fig. 1

## Fig. 2

Fig. 3